# EUROPEAN PATENT APPLICATION

(11) **EP 4 397 848 A1**
(43) Date of publication of application: **10.07.2024**
(21) Application number: 24150888.6
(22) Date of filing: 09.01.2024
(51) Int. Cl.: F02K 1/38, F02K 1/48

(54) **AIRCRAFT ENGINE EXHAUST MIXER**

(30) Priority: 09.01.2023 US 202318151721
(71) Applicant: PRATT & WHITNEY CANADA CORP., Longueuil, Québec J4G 1A1 (CA)
(72) Inventor: DORSAMY, Yashiva, (01BE5) Longueuil, J4G 1A1 (CA); DI FLORIO, Domenico, (01BE5) Longueuil, J4G 1A1 (CA)
(74) Representative: Dehns

(57) **Abstract**

An aircraft engine (10) including a core casing (20) defining a core passage (26), a nacelle (22) located radially outward from and circumferentially around the casing (20), and a bypass passage radially defined between the nacelle (22) and the casing (20). A mixer (30) mounted to the casing (20), including a wall (32) having a leading edge (32a) attached to the casing (20) and defining a plurality of lobes (34, 36, 38) that are circumferentially spaced apart. A damper ring (D) surrounds the mixer (30) at an axial location (a1, a2) between the leading edge (32a) and the trailing edge (32b) of the wall (32), and extends circumferentially uninterrupted, and extends axially from a first side (Da) to a second side (Db). The first side (Da) is spaced axially away from the leading edge (32a), and the damper ring (D) has an annular ring surface (Dc, Dd) extending between the first and second side (Da, Db). The damper ring (D) is radially mounted to the mixer wall (32) via an annular ring surface (Dc, Dd) to dampen the wall (32).

## Description

### TECHNICAL FIELD

The disclosure relates generally to aircraft engines and, more particularly, to exhaust mixers for such engines.

### BACKGROUND

Many modern aircraft engines, such as gas turbine engines of the turbofan type, are designed so as to harness the exhaust flows outputted by the engine. In the case of turbofan engines, this may include for example a colder, slower bypass flow and a hotter, faster core engine exhaust flow which meet and are exhausted together at the exit of the engine. Exhaust mixers provide an interface between the bypass flow and the core engine exhaust flow, which route the flows such that they ultimately interact as desired before they exit through a common nozzle.

Exhaust mixers can generally be said to fall into one of two general categories. Annular mixers typically include an annular rear edge separating the bypass and exhaust flows. The bypass and exhaust flows are brought together annularly downstream of the annular edge, and mixing is achieved by shearing between the flows. Such annular mixers typically offer the benefit of a low pressure loss. Forced mixers involve intertwining hot and cold airflows, typically in the form of circumferentially disposed mixer lobes that alternately extend radially outward to outer vertices (crests) of the mixer and radially inward to inner vertices (valleys) of the mixer to create a circumferentially alternating sequence of hot and cold flow streams. Such forced mixers typically offer the benefit of a mixing efficiency that is greater than that of annular mixers, but may be associated with higher pressure losses.

### SUMMARY

In an aspect of the present invention, there is provided an aircraft engine comprising: an engine casing housing a core of the aircraft engine, the engine casing extending circumferentially about an axis of the aircraft engine and defining a core flow passage therewithin; a nacelle located radially outward from and circumferentially around the engine casing, a bypass flow passage radially defined between the nacelle and the engine casing; a mixer mounted to the engine casing, the mixer including a peripheral wall having leading edge and a trailing edge axially spaced from one another and extending around the axis, the leading edge attached to the engine casing, the peripheral wall defining a plurality of lobes that are circumferentially spaced apart relative to the axis; and a damper ring surrounding the mixer at an axial location between the leading edge and the trailing edge of the peripheral wall, the damper ring extending circumferentially uninterrupted around the axis, the damper ring extending axially from a first ring side to a second ring side, the first ring side being spaced axially away from the leading edge, the damper ring having an annular ring surface extending between the first ring side and the second ring side, the damper ring being radially mounted to the peripheral wall of the mixer via the annular ring surface to dampen the peripheral wall at the axial location.

In an embodiment of the above, the annular ring surface is a radially inner surface.

In a further embodiment of any of the above, the plurality of lobes define radially outer recesses that are circumferentially spaced apart, and the annular ring surface engages the lobes via the radially outer recesses.

In a further embodiment of any of the above, the mixer includes at least one inner hook extending radially inwardly from at least one of the plurality of lobes, and the annular ring surface engages the lobes via the at least one inner hook.

In a further embodiment of any of the above, the at least one inner hook is an annular structure.

In a further embodiment of any of the above, the annular ring surface is a radially outer surface.

In a further embodiment of any of the above, the plurality of lobes define radially inner recesses that are circumferentially spaced apart, and the annular ring surface engages the lobes via the radially inner recesses.

In a further embodiment of any of the above, the mixer includes at least one outer hook extending radially outwardly from at least one of the plurality of lobes, and the annular ring surface engages the lobes via the at least one outer hook.

In a further embodiment of any of the above, the at least one outer hook is an annular structure.

In a further embodiment of any of the above, the damper ring has a first end and a second end, the annular ring surface extending circumferentially from the first end to the second end, the first end and the second end being positionable relative to one another so as to vary a perimeter of the annular ring surface.

In a further embodiment of any of the above, the damper ring is axially displaceable relative to the mixer with the plurality of lobes remaining radially bound at least indirectly by the annular ring surface.

In a further embodiment of any of the above, an actuator is mounted to the engine casing and operatively connected to the damper ring to displace the damper ring axially relative to the axis with respect to the peripheral wall.

In a further embodiment of any of the above, a radial thickness of the damper ring is greater than an axial width of the damper ring.

In another aspect of the present invention, there is provided an exhaust section of an aircraft engine, the exhaust section comprising: an exhaust case extending circumferentially about an axis; a mixer mounted to the exhaust case, the mixer including a peripheral wall having leading edge and a trailing edge axially spaced from one another and extending around the axis, the leading edge attached to the exhaust case, the peripheral wall defining a plurality of lobes that are circumferentially spaced apart relative to the axis; and a damper ring extending circumferentially uninterrupted around the axis and axially from a first ring side to a second ring side, the first ring side being spaced axially away from the leading edge, the damper ring being radially mounted to the plurality of lobes, the damper ring being circumferentially free relative to the plurality of lobes.

In an embodiment of the above, the damper ring is disposed radially outward of the plurality of lobes.

In a further embodiment of any of the above, the damper ring is recessed into the plurality of lobes.

In a further embodiment of any of the above, at least one outer hook connects at least some lobes of the plurality of lobes and a radially outer surface of the damper ring.

In a further embodiment of any of the above, the damper ring is disposed radially inward of the plurality of lobes.

In a further embodiment of any of the above, the damper ring is recessed into the plurality of lobes.

In a further embodiment of any of the above, at least one inner hook connecting at least some lobes of the plurality of lobes and a radially inner surface of the damper ring.

### BRIEF DESCRIPTION OF THE DRAWINGS

Reference is now made to the accompanying figures in which:
Fig. 1 is a schematic cross-sectional view of an aircraft engine;
Fig. 2 is a perspective view of portions of an exhaust section of the engine of Fig. 1;
Fig. 3 is an elevation view of an exhaust mixer according to embodiments; and
Figs. 4A-4F are cross-sectional views of exhaust mixers according to embodiments.

### DETAILED DESCRIPTION

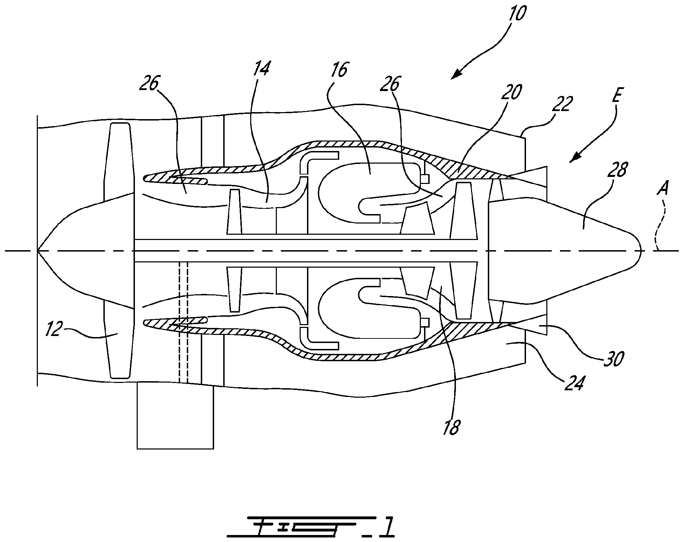

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases.

The engine 10 includes a first, inner casing 20, or engine casing 20, which encloses the core turbo machinery of the engine 10, and a second, outer casing 22, or nacelle 22, extending outwardly of the first casing 20 so as to define an annular bypass flow passage 24 therebetween. The air flow propelled by the fan 12 is split into a first portion which flows around the first casing 20 within the bypass flow passage 24, and a second portion which flows through a core flow passage 26 which is defined within the first casing 20 and allows the flow to circulate through the compressor section 14, the combustor 16 and the turbine section 17 as described above.

At the aft end of the engine 10, an axisymmetric bullet 28 is centered on an axis A of the engine 10 and defines an inner wall of the core flow passage 26 so that the combustion gases flow therearound. A multi-lobed exhaust mixer 30 (or simply "mixer") surrounds at least a portion of the bullet 28, the mixer 30 acting as a rearmost portion of the outer wall defining the core flow passage 26 and a rearmost portion of the inner wall defining the bypass flow passage 24. The bullet 28 and the mixer 30 may be said to form part of an exhaust section E of the engine 10. The hot combustion gases from the core flow passage 26 and the relatively cooler air from the bypass flow passage 24 are thus mixed together by the mixer 30 at the exit thereof so as to produce an exhaust flow having a reduced temperature relative to that of the combustion gases inside the core flow passage 26 immediately outside the combustor 16.

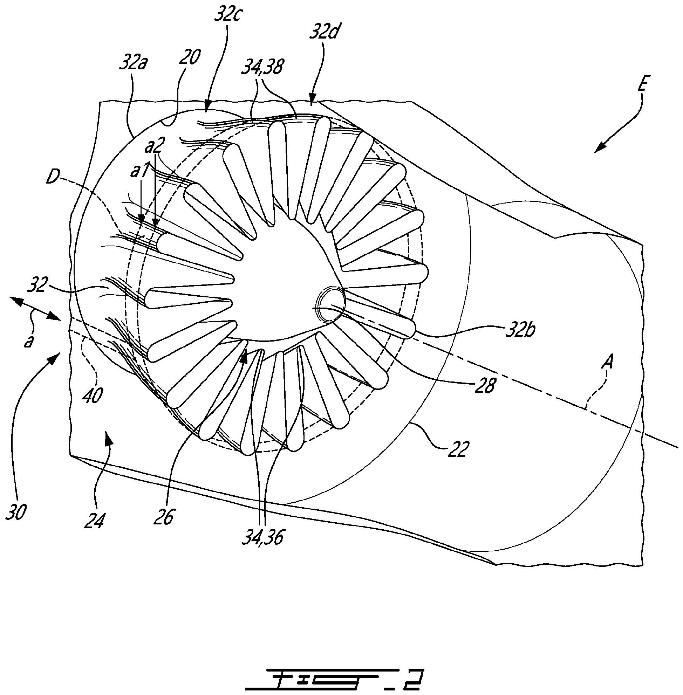

Referring to Fig. 2, the mixer 30 includes a peripheral wall 32 having a leading edge 32a and a trailing edge 32b spaced axially away from the leading edge 32a relative to the axis A. The leading edge 32a is a foremost peripheral contour of the mixer 30. At least in some embodiments, the leading edge 32a is defined by a mounting flange of the mixer 30 that may or may not be integral to the peripheral wall 32. At or near the leading edge 32a, the mixer 30 is mounted to an aft portion of the first casing 20 referred to as a turbine exhaust case. The mixer 30 can thus be described as the last stage of the turbine exhaust case. The trailing edge 32b is a rearmost peripheral contour of the mixer 30. The peripheral wall 32 defines a plurality of lobes 34 that are circumferentially spaced apart from one another relative to the axis A. The peripheral wall 32 thus has, at least at some axial locations relative to the axis A, a peripheral contour that defines alternating valleys 36 (i.e., circumferentially-spaced radially inner portions of the peripheral contour) and crests 38 (i.e., circumferentially-spaced radially outer portions of the peripheral contour).

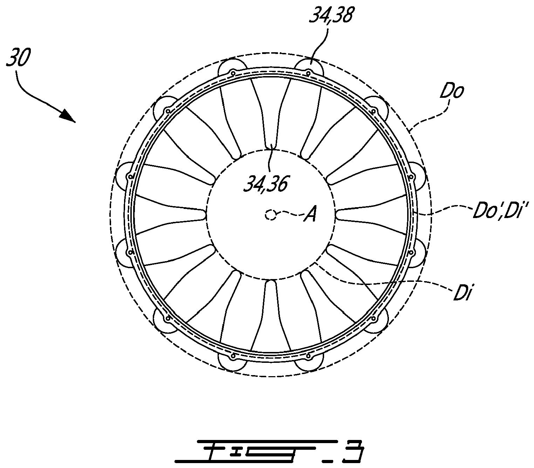

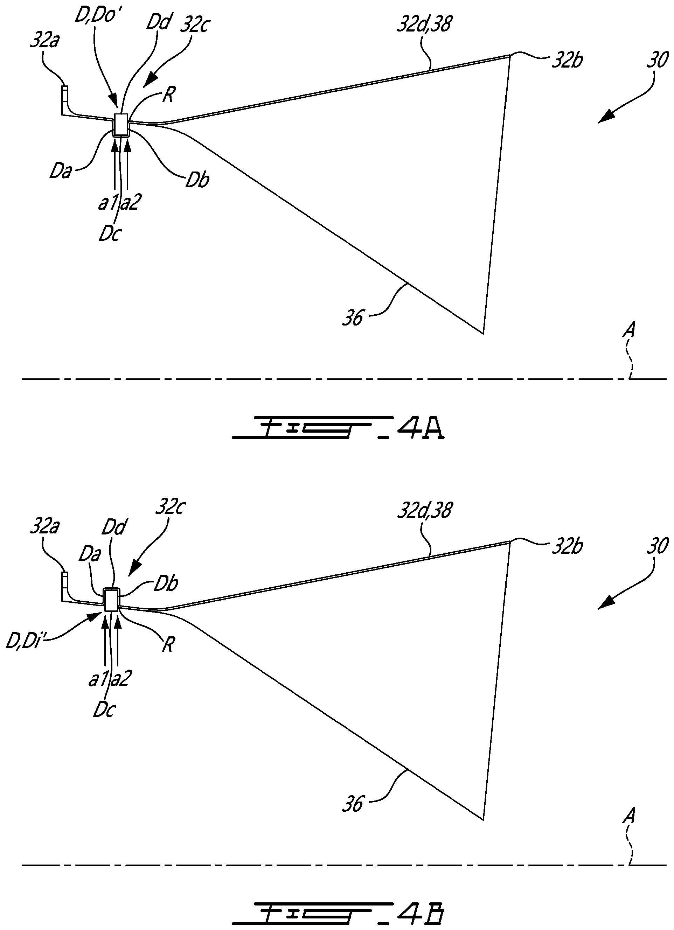

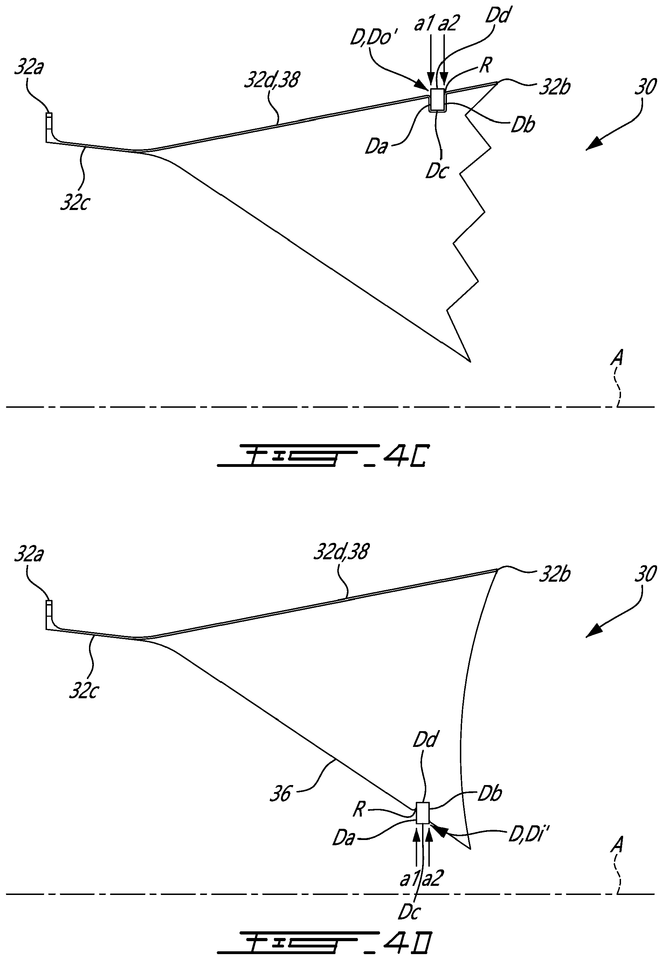

Depending on the implementation, various geometrical parameters of the mixer 30 can be set so as to optimize performance such as dimension(s) (e.g., length, diameters at the leading edge 32a, diameters at the trailing edge 32b, etc.) but also shape(s). Various peripheral profiles are contemplated for the mixer 30. At least some of the valleys 36 and/or at least some of the crests 38 have a lobed shape, i.e., are lobes 34. Lobed valleys 36 and lobed crests 38 can respectively be referred to as inner lobes 36 and outer lobes 38. In embodiments, all of the valleys 36 are lobed. In embodiments, all of the crests 38 are lobed. In embodiments including those depicted in the Figures, all of the valleys 36 and all of the crests 38 are lobes 34. Stated otherwise, all of the valleys 36 are inner lobes 36, and all of the crests 38 are outer lobes 38. As shown in Figs 3A-3C, the valleys 36 can be located, at least in part, radially inward of the leading edge 32a relative to the axis A, and the crests 38 can be located, at least in part, radially outward of the leading edge 32a relative to the axis A. The peripheral profile of the mixer 30 may also be described relative to the bypass flow passage 24 and the core flow passage 26. For example, in the depicted embodiments and as best seen in Fig. 2, the inner lobes 36 extend radially inwardly relative to an outer boundary of the core flow passage 26, and thus impinge on the flow exiting the core flow passage 26. The outer lobes 38 extend radially outwardly relative to an inner boundary of the bypass flow passage 24, and thus impinge on the flow exiting the bypass flow passage 24. Various cross-sectional profiles are contemplated for the mixer 30. As the inner lobes 36 and the outer lobes 38 extend toward the trailing edge 32b, they may define a linear profile (e.g., as shown in the embodiments depicted in Figs. 4A-4E), a curved profile or a combination of one or more linear profile(s) and/or curved profile(s). At the trailing edge 32b, the mixer 30 may define a linear profile (e.g., Figs. 4A-4C), a chevron profile (e.g., Fig. 4C) or a curved profile (e.g., Fig. 4D).

The geometry of the mixer 30 impacts the dynamic response of the mixer 30 as the engine 10 operates. Indeed, engine operation generates vibration which affects even static components such as the mixer 30. Asymmetrical mass distribution in rotating components, component wear, foreign object impact, and aerodynamic forces are among causes of engine vibration. The mixer 30 is characterized by natural vibration frequencies depending on the stiffness and mass distribution of the mixer 30, with each natural frequency being associated with a different mode shape. In any mode shape, some portions of a vibrating structure move, whereas others, referred to as nodes, generally do not. In a given mode shape for a component having a periodic rotational symmetry such as the mixer 30, the component may exhibit nodes (whether point(s), line(s) and/or circle(s)) that conform to the periodic rotational symmetry. During engine operation at a regime within the standard operating range, if the engine 10 produces, at the mixer 30, an excitation vibration that corresponds to a natural frequency of the mixer 30, local displacement(s) of the mixer 30 of a significant amplitude and consistent with the corresponding mode shape can occur, which is undesirable.

The present technology thus provides mixers 30 that are structurally arranged for attenuating the amplitude of displacement associated with certain mode shapes thereof, i.e., that are provided with discrete structural features for breaking undesirable mode shape(s), i.e., for preventing resonant vibration. At least in some cases, this may be achieved by radially binding the mixer 30, and thus hindering deformation thereof, at axial location(s) of the mixer 30 otherwise prone to problematic vibration. Thus, mixers 30 according to the present technology are provided with at least one damper ring D (or simply "damper" D) located between the leading edge 32a and the trailing edge 32b and extending circumferentially about the axis A so as to follow a diameter of the mixer 30. Referring to Fig. 3, the damper D may follow an inner diameter Di of the lobed portion 32d (for example a diameter corresponding to a radial location along the crest of an inner lobe 36), an outer diameter Do of the lobed portion 32d (for example a diameter corresponding to a radial location along the crest of an outer lobe 38), an inner diameter Di' of the annular portion 32c (for example a diameter corresponding to that of an inner annular surface of the annular portion 32c) or an outer diameter Do' of the annular portion 32c (for example a diameter corresponding to that of an outer annular surface of the annular portion 32c).

Referring back to Fig. 2, the damper D is spaced away from the leading edge 32a of the mixer 30, and extends axially between a first axial location a1 and a second axial location a2 of the peripheral wall 32 relative to the axis A. In some embodiments, the damper D is axially displaceable relative to the peripheral wall 32, such that the position of the axial locations a1, a2 relative to the leading edge 32a (or relative to the trailing edge 32b) may be selectively set within a pre-determined range, as schematically shown at a. This allows, at least under certain circumstances, to optimize the damping provided by the damper D according to the vibration expected for a given operating regime of the engine 10. The axial locations a1, a2, i.e., the axial position of the damper D, can be optimized. In some implementations, the axial position of the damper D can be selected to minimize impact on aerodynamics of the mixer 30 and/or to maximize damping depending on targeted mode shapes, i.e., mode shapes intended to be broken. In some such embodiments, the mixer 30 is provided with an actuator 40, for example mounted to the engine casing 20, that is operatively connected to the damper D to displace the damper D axially relative to the axis A with respect to the peripheral wall 32. The actuator 40 may connect to the damper D at various circumferentially spaced-apart locations, for example locations coinciding with spaces between consecutive lobes 34 of the mixer 30.

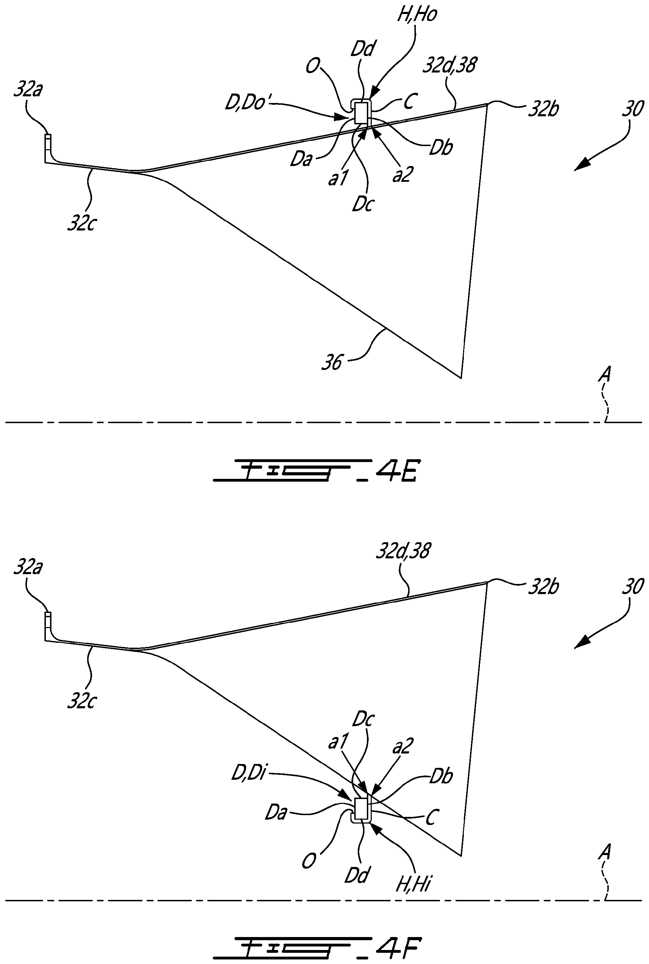

As best seen in Figs. 4A-4F, the damper D is a ring-like body that extends axially from a first ring side Da facing the leading edge 32a to a second ring side Db facing the trailing edge 32b. The damper D also has a radially-inner annular ring surface Dc and a radially-outer annular ring surface Dd that respectively extend between the first ring side Da and the second ring side Db. The damper D defines a closed perimeter, i.e., the damper D extends circumferentially uninterrupted around the axis A. The damper D may have a rectangular cross-section, for example defined by flat ring sides Da, Db and cylindrical annular ring surfaces Dc, Dd, although other shapes are contemplated. For instance, any of the surfaces Da, Db, Dc, Dd of the damper D may be shaped complementarily to another surface of the mixer 30 to be engaged by the damper D. Depending on the embodiment, the peripheral wall 32 is radially bound either by the radially-inner annular ring surface Dc or by the radially-outer annular ring surface Dd, whether directly (see for example Figs. 4A-4D) or indirectly (see for example Figs 4E, 4F). The skilled reader will understand that "radially bound" means that radial displacement of the peripheral wall 32 is hindered, and in some cases prevented, by the damper D at least at a given axial location and at least in a given radial direction relative to the axis A, such that vibration occurring in the peripheral wall 32 may be damped at the given axial location by way of the damper D. In embodiments, the damper D is circumferentially free relative to the peripheral wall 32 (or to the structure via which the damper D binds the peripheral wall 32, if present). This allows, at least under certain circumstances, some slippage at the interface between the damper D and the structure of the mixer 30 that is bound thereby when vibration occurs, which may be desirable to dissipate kinetic energy. In some embodiments, a radial thickness of the damper D is greater than an axial width of the damper D. This allows, at least under certain circumstances, to provide a relatively high damping effect in a relatively narrow axial span of the mixer 30.

Referring to Figs. 4A-4B, in some embodiments, the damper D radially binds the annular portion 32c of the peripheral wall 32, whether directly (as shown) or indirectly. In some such embodiments, the damper D is disposed radially outward of the outer lobes 38 or radially inward of the inner lobes 36. In other such embodiments, the damper D is recessed into the annular portion 32c. In Fig. 4A, the annular portion 32c defines a recess R that extends radially into its outer annular surface, i.e., radially inward of the outer diameter Do'. The damper D is received into the recess R, such that the radially-inner annular ring surface Dc engages the peripheral wall 32 inside the recess R. In Fig. 4B, the annular portion 32c defines a recess R that extends radially into its inner annular surface, i.e., radially inward of the inner diameter Di'. The damper D is received into the recess R, such that the radially-outer annular ring surface Dd engages the peripheral wall 32 inside the recess R.

Referring to Figs. 4C-4F, in some embodiments, the damper D radially binds the lobed portion 32d of the peripheral wall 32, whether directly (see Figs. 4C-4D) or indirectly (see Figs. 4E-4F). In some such embodiments, the damper D is recessed into the lobed portion 32d, i.e., into a plurality of lobes 34. In Fig. 4C, the lobed portion 32d defines a recess R (corresponding to a plurality of circumferentially spaced-apart recess segments) that extends radially into its outer lobes 38, i.e., radially inward of the outer diameter Do. The damper D is received into the recess R, such that the radially-inner annular ring surface Dc engages the peripheral wall 32 inside the recess R. In Fig. 4B, the lobed portion 32d defines a recess R (corresponding to a plurality of circumferentially spaced-apart recess segments) that extends radially into its inner lobes 36, i.e., radially inward of the inner diameter Di. The damper D is received into the recess R, such that the radially-outer annular ring surface Dd engages the peripheral wall 32 inside the recess R.

In some embodiments in which the damper D is recessed, the recess R may have an axial width that is commensurate to that of the damper D. In some embodiments, the recess R is axially wider than the damper D so as to allow axial displacement thereof relative to the peripheral wall 32. Also, a height of the recess R may be optimized so as to receive therein a desired radial span of the damper D and thus reduce the aerodynamic impact of the damper D on the mixer 30. The height of the recess R may also assist in providing suitable retention of the damper D, for example via friction between either one or both of the first ring side Da and the second ring side Db and a corresponding one of the sides of the recess R.

Referring to Figs. 4E-4F, in some embodiments, the mixer 30 may be provided with hook(s) H via which the peripheral wall 32 may be indirectly radially bound by the damper D. Depending on the embodiment, the annular portion 32c and/or the lobed portion 32d may be provided with hook(s) H. For example, in Fig. 4E, the lobed portion 32d is provided with outer hook(s) Ho extending radially outwardly relative to at least one of the plurality of outer lobes 38. The radially-outer annular ring surface Dd engages the outer lobes 38 via the outer hook(s) Ho. In Fig. 4F, the lobed portion 32d is provided with inner hook(s) Hi extending radially inwardly relative to at least one of the plurality of inner lobes 36. The radially-inner annular ring surface Dc engages the inner lobes 38 via the inner hook(s) Hi.

At least in some embodiments in which the mixer 30 is provided with hook(s), the hook(s) may be an annular structure. Alternatively, a hook H may be formed of a plurality of individual hook segments that are circumferentially spaced-apart and connected to at least some of the lobes 34. Each hook H (or hook segment, when applicable) has a closed side C and an open side O via which the damper D may be received in the hook H. In some embodiments, the open side O faces toward the leading edge 32a. In some embodiments, the open side O is partially closed by a radial lip which may assist in axially retaining the damper D upon the damper D radially engaging the hook H. A portion of the hook H (for example an end of the closed side C) that attaches to the peripheral wall 32 is sized so as to have an axial width that extends from the first axial location a1 to the second axial location a2 between which damping of the mixer 30 is desired. Depending on the embodiment, an axial width of the damper D may be different than the axial width of the attachment of the hook H. A retentive portion of the hook H that receives the damper D may be provided with an axial width and a radial height that are suitable for facilitating placement of the damper D therein and for subsequent retention of the damper D therein, for example via friction.

Binding of the peripheral wall 32 may be done passively (i.e., by providing a damper D that espouses the diameter of the peripheral wall 32 at the axial location where damping is desired) or actively. Active binding can be performed in several ways. In some embodiments, the damper D has a first end and a second end and the annular ring surfaces Dc, Dd extend circumferentially from the first end to the second end. The first end and the second end are positionable relative to one another so as to vary a perimeter of the annular ring surfaces Dc, Dd until the perimeter is suitable for the damper D to forcibly engage the peripheral wall 32, whether directly or indirectly. In some embodiments, the damper D is resiliently deformable radially so as to allow its placement at the axial location where damping is desired, such that it radially engages, whether directly or indirectly, the peripheral wall as it reverts toward its undeformed state. For example, the damper D may be deformed radially outwardly to be placed in an inwardly extending recess R or hook H, or radially inwardly to be placed in an outwardly extending recess R or hook H.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An aircraft engine (10) comprising:
an engine casing (20) housing a core of the aircraft engine (10), the engine casing (20) extending circumferentially about an axis (A) of the aircraft engine (10) and defining a core flow passage (26) therewithin;
a nacelle (22) located radially outward from and circumferentially around the engine casing (20), a bypass flow passage (24) radially defined between the nacelle (22) and the engine casing (20);
a mixer (30) mounted to the engine casing (20);
**characterized in that**:
the mixer (30) includes a peripheral wall (32) having a leading edge (32a) and a trailing edge (32b) axially spaced from one another and extending around the axis (A), the leading edge (32a) attached to the engine casing (20), the peripheral wall (32) defining a plurality of lobes (34, 36, 38) that are circumferentially spaced apart relative to the axis (A); and
a damper ring (D) surrounds the mixer (30) at an axial location (a1, a2) between the leading edge (32a) and the trailing edge (32b) of the peripheral wall (32), the damper ring (D) extending circumferentially uninterrupted around the axis (A), the damper ring (D) extending axially from a first ring side (Da) to a second ring side (Db), the first ring side (Da) being spaced axially away from the leading edge (32a), the damper ring (D) having an annular ring surface (Dc, Dd) extending between the first ring side (Da) and the second ring side (Db), the damper ring (D) being radially mounted to the peripheral wall (32) of the mixer (30) via the annular ring surface (Dc, Dd) to dampen the peripheral wall (32) at the axial location (a1, a2).

2. The aircraft engine (10) of claim 1, wherein the annular ring surface (Dc) is a radially inner surface.

3. The aircraft engine (10) of claim 2, wherein the plurality of lobes (34, 36, 38) define radially outer recesses (R) that are circumferentially spaced apart, and the annular ring surface (Dc) engages the lobes (34, 36, 38) via the radially outer recesses (R).

4. The aircraft engine (10) of claim 2 or 3, wherein the mixer (30) includes at least one inner hook (Hi) extending radially inwardly from at least one of the plurality of lobes (34, 36, 38), and the annular ring surface (Dc) engages the lobes (34, 36, 38) via the at least one inner hook (Hi).

5. The aircraft engine (10) of claim 4, wherein the at least one inner hook (Hi) is an annular structure.

6. The aircraft engine (10) of claim 1, wherein the annular ring surface (Dd) is a radially outer surface.

7. The aircraft engine (10) of claim 6, wherein the plurality of lobes (34, 36, 38) define radially inner recesses (R) that are circumferentially spaced apart, and the annular ring surface (Dd) engages the lobes (34, 36, 38) via the radially inner recesses (R).

8. The aircraft engine (10) of claim 6 or 7, wherein the mixer (30) includes at least one outer hook (Ho) extending radially outwardly from at least one of the plurality of lobes (34, 36, 38), and the annular ring surface (Dd) engages the lobes (34, 36, 38) via the at least one outer hook (Ho).

9. The aircraft engine (10) of claim 8, wherein the at least one outer hook (Ho) is an annular structure.

10. The aircraft engine (10) of any preceding claim, wherein the damper ring (D) has a first end and a second end, the annular ring surface (Dc, Dd) extending circumferentially from the first end to the second end, the first end and the second end being positionable relative to one another so as to vary a perimeter of the annular ring surface (Dc, Dd).

11. The aircraft engine (10) of any preceding claim, wherein the damper ring (D) is axially displaceable relative to the mixer (30) with the plurality of lobes (34, 36, 38) remaining radially bound at least indirectly by the annular ring surface (Dc, Dd).

12. The aircraft engine (10) of claim 11, further comprising an actuator (40) mounted to the engine casing (20) and operatively connected to the damper ring (D) to displace the damper ring (D) axially relative to the axis (A) with respect to the peripheral wall (32).

13. The aircraft engine (10) of any preceding claim, wherein a radial thickness of the damper ring (D) is greater than an axial width of the damper ring (D).
